# EUROPEAN PATENT SPECIFICATION

(11) **EP 4 122 040 B1**
(45) Date of publication and mention of the grant of the patent: **28.01.2026**
(21) Application number: 21772634.8
(22) Date of filing: 12.03.2021
(51) Int. Cl.: H01M 10/613, B60L 58/26, H01M 10/625, H01M 10/6568, F16L 41/03, H01M 10/663

(54) **PROPULSION BATTERY COOLING SYSTEM AND VEHICLE THEREOF**
ANTRIEBSBATTERIEKÜHLSYSTEM UND FAHRZEUG DAFÜR
SYSTÈME DE REFROIDISSEMENT DE BATTERIE DE PROPULSION ET VÉHICULE ASSOCIÉ

(30) Priority: 17.03.2020 SE 2050289
(43) Date of publication of application: 25.01.2023
(73) Proprietor: Scania CV AB, 151 87 Södertälje (SE)
(72) Inventor: KARDOS, Zoltan, 151 35 Södertälje (SE); MOHLIN, Martin, 117 61 Stockholm (SE); HALL, Ola, 117 67 Stockholm (SE); ALSTERDAL, Tomas, 151 46 Södertälje (SE)
(74) Representative: Scania CV AB
(86) International application number: PCT/SE2021/050218
(87) International publication number: WO 2021/188030

(56) References cited:
- EP-A1- 3 336 958
- EP-A1- 3 419 843
- WO-A1-2013/170927
- WO-A2-2009/029138
- CN-B- 106 505 276
- CN-U- 205 882 124
- DE-A1- 102018 102 927
- US-A1- 2008 299 446
- US-A1- 2012 153 718
- US-A1- 2013 164 593
- US-A1- 2016 113 149
- US-A1- 2019 070 924

## Description

### TECHNICAL FIELD

The present disclosure relates to coolant distribution manifold for a vehicle propulsion battery cooling system. The present disclosure further relates to a vehicle propulsion battery cooling system and a vehicle comprising a vehicle propulsion battery cooling system.

### BACKGROUND

The use of electric drive for vehicles provides many advantages, especially regarding local emissions. Such vehicles comprise one or more electric machines configured to provide motive power to the vehicle. These types of vehicles can be divided into the categories pure electric vehicles and hybrid electric vehicles. Pure electric vehicles, sometimes referred to as battery electric vehicles, only-electric vehicles, and all-electric vehicles, comprise a pure electric powertrain and comprise no internal combustion engine and therefore produce no emissions in the place where they are used.

A hybrid electric vehicle comprises two or more distinct types of power, such as an internal combustion engine and an electric propulsion system. The combination of an internal combustion engine and an electric propulsion system provides advantages with regard to energy efficiency compared to vehicles using only an internal combustion engine, partly because of the poor energy efficiency of an internal combustion engine at lower power output levels. Moreover, some hybrid electric vehicles are capable of operating in pure electric drive when wanted, such as when driving in certain areas requiring low noise levels and/or low emission levels.

The use of electric drive for vehicles is also associated with some problems and drawbacks. One problem is storage of electricity in the vehicle. The electricity is stored in batteries of the vehicle and some different types of batteries are used, such as lithium-ion batteries, lithium polymer batteries, and nickel-metal hydride batteries. Several batteries are needed to ensure sufficient operational range of a vehicle, especially on long range battery electric trucks and busses.

A battery generates heat during charging and discharging. Too high temperatures and too low temperatures may damage and/or reduce lifetime of a battery. Moreover, batteries have a reduced efficiency at low and high temperatures. Therefore, vehicles with electric drive comprise a battery cooling system capable of regulating the temperature of the batteries of the vehicle. In most cases, such a battery cooling system comprises several coolant circuits since each battery needs to be tempered to a certain temperature due to internal differences such as resistance, wear, and the like, of individual battery cells. On heavier vehicles, such as long range battery electric trucks and busses, the battery cooling system usually comprises one coolant circuit per battery pack, or one coolant circuit per group of battery packs.

Arranging several coolant pumps in the same cooling system is problematic due to different pressure drops in each coolant circuit together with separate demands of coolant flow for each battery pack. This may create back flows and zero flow situations in the battery cooling system.

Furthermore, in a cooling system comprising several coolant circuits, the deairing of the coolant circuits can be problematic. That is, air inside a coolant circuit reduces the efficiency of the coolant circuit, partly because air has a much lower specific heat capacity than coolant. Moreover, air inside a coolant circuit may harm components of the coolant circuit, such as a coolant pump of the coolant circuit.

Batteries and battery cooling systems are arranged in limited areas of vehicles with electric drive. The batteries occupy a large proportion of the available space. Moreover, other components of the vehicle, such as hydraulic arrangements, transmission components, power electronics, and the like, take up space. Therefore, it is an advantage if the available space inside a vehicle is utilized in an efficient manner.

US 2016/113149 describes a cooling system which includes coolant manifold structure.

US 2008/299446 describes a battery assembly which may include a cooling system assembly having a coolant manifold.

Moreover, generally, on today's consumer market, it is an advantage if vehicles and their associated components have conditions and/or characteristics suitable for being manufactured and assembled in a cost-efficient manner.

### SUMMARY

It is an object of the present invention to overcome, or at least alleviate, at least some of the above-mentioned problems and drawbacks.

According to a first aspect of the invention, the object is achieved by a vehicle propulsion battery cooling system comprising a temperature conditioning circuit, at least two coolant circuits each configured to cool a respective set of propulsion battery cells, and a coolant distribution. The coolant distribution manifold comprises a coolant inlet configured to receive coolant from the temperature conditioning circuit, a receiving section configured to receive coolant from the at least two coolant circuits, and a supplying section configured to supply coolant to the at least two coolant circuits. The supplying section is arranged downstream of the coolant inlet and of the receiving section relative to an intended flow direction through the manifold.

Thereby, a cooling system is provided allowing for an individual control of the flow rate through each one of the at least two coolant circuits without any significant risk of flow disturbances, such as back flows or zero flow situations, in the manifold or in the battery cooling system. This because the two or more coolant circuits are supplied with coolant from one common tempered coolant reservoir having one pressure level. Accordingly, a cooling system is provided allowing for an individual control of the cooling/heating efficiency of each one of the at least two coolant circuits without any significant risk of flow disturbances. In other words, a cooling system is provided allowing for an individual control of a temperature level of the respective set of propulsion battery cells without any significant risk of flow disturbances.

In addition, a cooling system is provided in which the temperature level supplied to the at least two coolant circuits can be regulated in a simple and efficient manner simply by controlling the flow and/or temperature of coolant from the temperature conditioning circuit.

Moreover, since the coolant distribution manifold of the cooling system comprises the coolant inlet, the receiving section, and the supplying section, a cooling system is provided having conditions for utilizing the available space inside a vehicle in an efficient manner. Furthermore, since the coolant distribution manifold of the cooling system comprises the coolant inlet, the receiving section, and the supplying section, a cooling system is provided having conditions and characteristics suitable for being manufactured and assembled in a cost-efficient manner.

In addition, since the coolant distribution manifold of the cooling system comprises the receiving section and the supplying section for connection to at least two coolant circuits, the coolant distribution manifold provides conditions for deairing the at least two coolant circuits and the temperature conditioning circuit in an efficient manner via the coolant distribution manifold.

Accordingly, a vehicle propulsion battery cooling system is provided overcoming, or at least alleviating, at least some of the above-mentioned problems and drawbacks. As a result, the above-mentioned object is achieved.

Optionally, the coolant inlet is arranged upstream of the receiving section relative to an intended flow direction through the manifold, is arranged at the receiving section, or is arranged between the receiving section and the supplying section. Thereby, the coolant in the coolant distribution manifold can be tempered in an efficient manner before reaching the supplying section.

Optionally, the manifold comprises a coolant outlet configured to feed coolant to the temperature conditioning circuit. Thereby, a continuous control of the temperature of the coolant in the coolant distribution manifold can be obtained in an efficient manner. As a further result thereof, a continuous control of the temperature of the coolant reaching the at least two coolant circuits can be obtained in an efficient manner.

Optionally, the coolant outlet is arranged between the receiving section and the supplying section, is arranged at the supplying section, or is arranged downstream of the supplying section. Thereby, the coolant in the coolant distribution manifold can be tempered in an efficient manner.

Optionally, the manifold is configured such that the supplying section is arranged above the receiving section relative to a local gravity vector at the location of the vehicle when the manifold is mounted in an intended mounting position on a vehicle and the vehicle is positioned in an upright use position on a flat horizontal surface. Thereby, the coolant distribution manifold provides conditions for deairing the at least two coolant circuits and the temperature conditioning circuit in a further efficient manner via the coolant distribution manifold.

Optionally, each of the receiving section and the supplying section is tubular, and wherein the manifold comprises a u-shaped section between the receiving section and the supplying section. Thereby, a coolant distribution manifold is provided having conditions for utilizing the available space inside a vehicle in a further efficient manner. In addition, the coolant distribution manifold provides conditions for deairing the at least two coolant circuits and the temperature conditioning circuit in a further efficient manner via the coolant distribution manifold.

Optionally, a flow cross sectional area through the manifold is at least twice as large as a flow cross sectional area through each connection between the manifold and the at least two coolant circuits. Thereby, a manifold is provided in which each coolant circuit can be supplied with coolant from one common tempered coolant reservoir having conditions for supplying coolant to each of the at least two coolant circuits at a more constant temperature level and a more constant pressure level. As a further result thereof, a coolant distribution manifold is provided in which the risk of flow disturbances, such as back flows and zero flow situations in the battery cooling system, is further reduced.

Optionally, the manifold comprises a deairing section configured to evacuate air from the manifold. Thereby, a coolant distribution manifold is provided having conditions for deairing the at least two coolant circuits and the temperature conditioning circuit in an efficient manner, with regard to the deairing efficiency, the space efficiency, and the cost efficiency.

Optionally, the deairing section is arranged downstream of the supplying section. Thereby, a coolant distribution manifold is provided having conditions for deairing the at least two coolant circuits and the temperature conditioning circuit in a further efficient manner.

Optionally, the manifold is configured such that the deairing section is arranged above the coolant inlet, the receiving section, and the supplying section relative to a local gravity vector at the location of the vehicle when the manifold is mounted in an intended mounting position on a vehicle and the vehicle is positioned in an upright use position on a flat horizontal surface. Thereby, a coolant distribution manifold is provided having conditions for deairing the at least two coolant circuits and the temperature conditioning circuit in a further efficient manner.

Optionally, each of the at least two coolant circuits comprises a coolant pump configured to pump coolant through the respective coolant circuit. Thereby, a cooling system is provided in which the cooling/heating efficiency of each one of the at least two coolant circuits can be regulated without any significant risk of flow disturbances in the battery cooling system simply by controlling the pump rate of the respective coolant pump.

Optionally, each set of propulsion battery cells forms part of a propulsion battery pack. Thereby, a cooling system is provided capable of cooling a number of battery packs in an efficient and individual manner without any significant risk of flow disturbances in the cooling system.

Optionally, the manifold comprises a deairing section, and wherein the cooling system comprises an expansion tank fluidly connected to the deairing section. Thereby, a cooling system is provided capable of deairing the at least two coolant circuits and the temperature conditioning circuit in an efficient manner, with regard to the deairing efficiency, the space efficiency, and the cost efficiency.

Optionally, the cooling system comprises at least four coolant circuits each configured to cool a respective set of propulsion battery cells, wherein the receiving section of the manifold is configured to receive coolant from the at least four coolant circuits, and wherein the supplying section of the manifold is configured to supply coolant to the at least four coolant circuits. Thereby, a cooling system is provided in which the four or more coolant circuits can be supplied with coolant from one common tempered coolant reservoir. As a result, a cooling system is provided allowing for an individual control of the cooling/heating efficiency of each one of the four or more coolant circuits without any significant risk of flow disturbances in the battery cooling system.

Furthermore, the cooling system provides conditions for deairing the four or more coolant circuits and the temperature conditioning circuit in an efficient manner via the coolant distribution manifold. Moreover, a cooling system is provided capable of supplying coolant to four or more coolant circuits while having conditions for utilizing the available space inside a vehicle in an efficient manner.

Optionally, the temperature conditioning circuit comprises a radiator and a coolant pump. Thereby, a coolant system is provided having conditions for regulating the temperature of the coolant in the coolant distribution manifold in an efficient manner.

According to a second aspect of the invention, the object is achieved by a vehicle comprising a set of propulsion battery cells and a vehicle propulsion battery cooling system according to some embodiments of the present disclosure, wherein the vehicle propulsion battery cooling system is configured to cool the set of propulsion battery cells.

Since vehicle comprises a vehicle propulsion battery cooling system according to some embodiments of the present disclosure, a vehicle is provided overcoming, or at least alleviating, at least some of the above-mentioned problems and drawbacks. As a result, the above-mentioned object is achieved.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 schematically illustrates a vehicle propulsion battery cooling system, according to some embodiments,
Fig. 2 illustrates a perspective view of a coolant distribution manifold, according to some embodiments,
Fig. 3 illustrates a side view of the coolant distribution manifold illustrated in Fig. 2, and
Fig. 4 schematically illustrates a vehicle according to some embodiments.

### DETAILED DESCRIPTION

Aspects of the present invention will now be described more fully. Like numbers refer to like elements throughout. Well-known functions or constructions will not necessarily be described in detail for brevity and/or clarity.

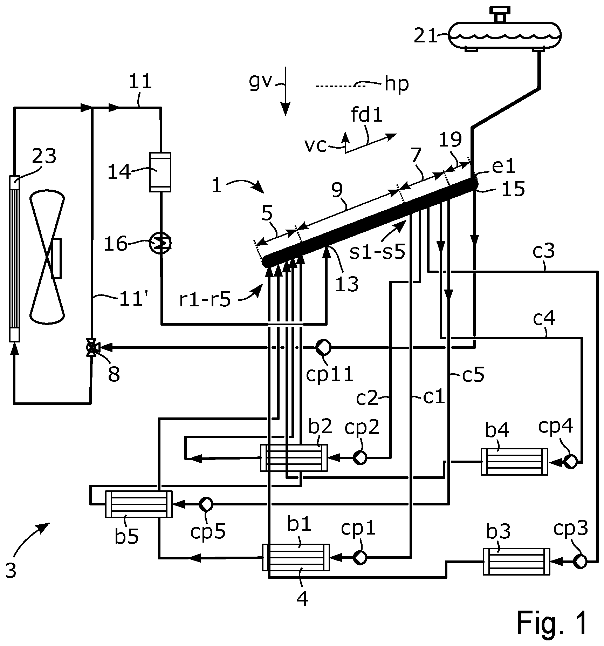

Fig. 1 schematically illustrates a vehicle propulsion battery cooling system 3, according to some embodiments. The vehicle propulsion battery cooling system 3 is in some places herein referred to as the "cooling system 3", for the reason of brevity and clarity. The cooling system 3 is configured to regulate the temperature of a number of propulsion batteries b1, b2, b3, b4, b5. Each propulsion battery b1, b2, b3, b4, b5 is configured to supply electricity to a propulsion motor of a vehicle comprising the propulsion battery b1, b2, b3, b4, b5. Moreover, each propulsion battery b1, b2, b3, b4, b5 comprises a number of battery cells 4. In Fig. 1, the reference sign "4" is indicated only at the propulsion battery b1 provided with the reference sign "b1" for the reason of brevity and clarity. According to the illustrated embodiments, the cooling system 3 is configured to regulate the temperature of five propulsion batteries b1, b2, b3, b4, b5.

According to embodiments herein, the cooling system 3 comprises at least two coolant circuits c1, c2, c3, c4, c5 each configured to cool a respective set b1, b2, b3, b4, b5 of propulsion battery cells 4. According to the illustrated embodiments, the cooling system 3 comprises five coolant circuits c1, c2, c3, c4, c5 each configured to cool a respective set b1, b2, b3, b4, b5 of propulsion battery cells 4. As indicated herein, the cooling system 3 may comprise another number of coolant circuits c1, c2, c3, c4, c5, such as three, four, six, seven, eight, nine, ten, or the like, wherein each coolant circuit c1, c2, c3, c4, c5 is configured to cool a respective set b1, b2, b3, b4, b5 of propulsion battery cells 4. Each set b1, b2, b3, b4, b5 of propulsion battery cells 4 may form part of a propulsion battery pack b1, b2, b3, b4, b5, as is the case according to the embodiments illustrated in Fig. 1. According to further embodiments, a set b1, b2, b3, b4, b5 of propulsion battery cells 4, as referred to herein, may comprise battery cells 4 of two or more propulsion battery packs, battery cells 4 of a propulsion battery having a certain voltage, battery cells 4 of a portion of a propulsion battery pack, or the like.

The cooling system 3 further comprises a temperature conditioning circuit 11. The temperature conditioning circuit 11 is a coolant circuit capable of providing heated and/or cooled coolant, as is further explained herein. According to the illustrated embodiments, the temperature conditioning circuit 11 comprises a radiator 23 and a coolant pump cp11. The coolant pump cp11 is configured to pump coolant through the temperature conditioning circuit 11. The radiator 23 is configured to radiate heat from the temperature conditioning circuit 11. The temperature conditioning circuit 11 comprises a valve 8 and a bypass line 11' bypassing the radiator 23. The valve 8 is controllable to direct coolant to the radiator 23 or to the bypass line 11'. According to some embodiments, the valve 8 is a thermostatic valve configured to direct coolant to the radiator 23 or to the bypass line 11' based on the temperature of coolant flowing through the valve 8. According to further embodiments, the valve 8 may be controlled by a control unit. The temperature conditioning circuit 11 further comprises a cooler 14 and a heater 16. The cooler 14 is configured to cool coolant flowing through the temperature conditioning circuit 11. The heater 16 is configured to heat coolant flowing through the temperature conditioning circuit 11. The cooler 14 may comprise, or be in thermal contact with, an evaporator of a heat pump circuit. The heater 16 may comprise an electrical heater.

The cooling system 3 comprises a coolant distribution manifold 1 according to some embodiments of the present disclosure. The coolant distribution manifold 1 is in some places herein referred to as the "distribution manifold 1", or the "manifold 1", for the reason of brevity and clarity. The coolant distribution manifold 1 comprises a coolant inlet 13. The coolant inlet 13 is configured to receive tempered coolant from the temperature conditioning circuit 11.

The coolant inlet 13, as referred to herein, may also be referred to as "the coolant temperature conditioning inlet 13". The manifold 1 further comprises a coolant outlet 15 configured to feed coolant to the temperature conditioning circuit 11. The "coolant outlet 15", as referred to herein, may also be referred to as "the coolant temperature conditioning outlet 15". The coolant distribution manifold 1 further comprises a receiving section 5. The receiving section 5 is configured to receive coolant from the at least two coolant circuits c1, c2, c3, c4, c5. That is, according to the illustrated embodiments, the receiving section 5 is configured to receive coolant from the five coolant circuits c1, c2, c3, c4, c5. The manifold comprises the same number of receiving connections r1-r5 as the number of coolant circuits c1, c2, c3, c4, c5, wherein each receiving connection r1-r5 is arranged at the receiving section 5 of the manifold 1 and is connected to a respective coolant circuit c1, c2, c3, c4, c5.

The coolant distribution manifold 1 further comprises a supplying section 7. The supplying section 7 is configured to supply coolant to the at least two coolant circuits c1, c2, c3, c4, c5. That is, according to the illustrated embodiments, the supplying section 7 is configured to supply coolant to the five coolant circuits c1, c2, c3, c4, c5. The manifold comprises the same number of supplying connections s1-s5 as the number of coolant circuits c1, c2, c3, c4, c5, wherein each supplying connection s1-s5 is arranged at the supplying section 7 of the manifold 1 and is connected to a respective coolant circuit c1, c2, c3, c4, c5.

As can be seen in Fig. 1, the supplying section 7 is arranged downstream of the coolant inlet 13 relative to an intended flow direction fd1 through the manifold 1. Moreover, the supplying section 7 is arranged downstream of the receiving section 5 relative to the intended flow direction fd1 through the manifold 1. In this manner, coolant from the temperature conditioning circuit 11 flowing into the manifold 1 via the coolant inlet 13 is mixed with the coolant from the coolant circuits c1, c2, c3, c4, c5 flowing into the receiving section 5 of the manifold 1 via the receiving connections r1-r5. Thereby, the coolant is tempered, i.e. heated or cooled, before flowing out from the manifold 1 via the supplying connections s1-s5 of the supplying section 7 into the coolant circuits c1, c2, c3, c4, c5. The section 9 between the receiving section 5 and the supplying section 7 may be referred to as a mixing section 9 since coolant from the temperature conditioning circuit 11 is mixed with the coolant from the coolant circuits c1, c2, c3, c4, c5 in this section 9 of the manifold 1. Likewise, for the same reason, the "coolant distribution manifold 1", as referred to herein, may also be referred to as a "coolant mixing manifold 1", or a "coolant mixing/distribution manifold 1". The mixing section 9 has a certain length seen along the intended flow direction fd1 through the manifold 1. According to some embodiments, the length of the mixing section 9, measured in a direction coinciding with the intended flow direction fd1 through the manifold 1, is more than 20% of the length of the total flow path through the manifold 1 measured in a direction coinciding with the intended flow direction fd1 through the manifold 1.

As can be seen in Fig. 1, each of the coolant circuits c1, c2, c3, c4, c5 comprises a coolant pump cp1, cp2, cp3, cp4, cp5 configured to pump coolant through the respective coolant circuit c1, c2, c3, c4, c5. Due to these features, the total cooling/heating power of the sets b1, b2, b3, b4, b5 of propulsion battery cells 4, cooled by the cooling system 3, can be regulated simply by regulating the temperature of the coolant in the temperature conditioning circuit 11 and the flow rate of coolant pumped from the temperature conditioning circuit 11 through the manifold 1. Moreover, due to these features, the individual temperature of each set b1, b2, b3, b4, b5 of propulsion battery cells 4 can be regulated by performing individual control of the respective coolant pump cp1, cp2, cp3, cp4, cp5 of the respective coolant circuit c1, c2, c3, c4, c5. That is, due to the features of the manifold 1, the coolant pumps cp1, cp2, cp3, cp4, cp5 can be controlled to provide different flow rates through different coolant circuits c1, c2, c3, c4, c5 without causing flow disturbances in the cooling system 3. This because each coolant circuit c1, c2, c3, c4, c5 is connected to the same volume of tempered coolant inside the manifold 1.

According to the illustrated embodiments, the coolant inlet 13 is arranged between the receiving section 5 and the supplying section 7 relative to the intended flow direction fd1 through the manifold 1. That is, according to the illustrated embodiments, the coolant inlet 13 is arranged at the mixing section 9. According to further embodiments, coolant inlet 13 may be arranged upstream of the receiving section 5 relative to the intended flow direction fd1, fd2 through the manifold 1. Furthermore, according to some embodiments, the coolant inlet 13 may be arranged at the receiving section 5. A great flexibility can be provided for the installation, connection, and routing of coolant conduits due to the different possible placements of the coolant inlet 13.

According to the illustrated embodiments, the coolant outlet 15, connected to the temperature conditioning circuit 11, is arranged downstream of the supplying section 7 relative to the intended flow direction fd1 through the manifold 1. According to further embodiments, the coolant outlet 15 may be arranged at the supplying section 7. Furthermore, according to some embodiments, the coolant outlet 15 may be arranged between the receiving section 5 and the supplying section 7 relative to the intended flow direction fd1 through the manifold 1, i.e. at the mixing section 9 referred to above. A great flexibility can be provided for the installation, connection, and routing of coolant conduits due to the different possible placements of the coolant outlet 15.

A horizontal plane hp and a local gravity vector gv are illustrated in Fig. 1. The local gravity vector gv is representative of a local gravity vector gv at the location of the cooling system 3. The horizontal plane hp is perpendicular to the local gravity vector gv, i.e. the normal to the horizontal plane hp is parallel to the local gravity vector gv. The components of the cooling system 3 are configured to be is mounted in an intended mounting position on a vehicle. In Fig. 1, the manifold 1 of the cooling system 3 is illustrated in a position corresponding to an intended mounting position thereof.

As can be seen in Fig. 1, the manifold 1 is configured such that the supplying section 7 is arranged above the receiving section 5 relative to a local gravity vector gv at the location of the vehicle when the manifold 1 is mounted in the intended mounting position on a vehicle and the vehicle is positioned in an upright use position on a flat horizontal surface. Moreover, the manifold 1 comprises a deairing section 19. The deairing section 19 is configured to evacuate air from the manifold 1, as is further explained herein. According to the illustrated embodiments, the cooling system 3 comprises an expansion tank 21 fluidly connected to the deairing section 19 via a deairing connection e1. Air entering the deairing section 19 is evacuated from the manifold 1 to the expansion tank 21 via the deairing connection e1. According to the illustrated embodiments, the manifold 1 is configured such that the deairing section 19 is arranged above the coolant inlet 13, the receiving section 5, and the supplying section 7 relative to a local gravity vector gv at the location of the vehicle when the manifold 1 is mounted in an intended mounting position on a vehicle and the vehicle is positioned in an upright use position on a flat horizontal surface. The manifold 1 may comprise one or more mounting structures adapted such that the manifold 1 obtains the intended mounting position when mounted to a vehicle. As understood from the herein described, a predetermined orientation of the manifold 1 relative to a local gravity vector gv at the location of the vehicle may be obtained when the manifold 1 is mounted in the intended mounting position on a vehicle and the vehicle is positioned in an upright use position on a flat horizontal surface.

Moreover, as can be seen in Fig. 1, the manifold 1 is arranged such that the intended flow direction fd1 through the manifold 1 has a vertical vector component vc with the same vertical direction along the full length of the flow path through the manifold 1 when the manifold 1 is mounted in the intended mounting position to a vehicle and the vehicle is positioned in an intended use position onto a flat horizontal surface. The feature that the vertical vector component vc has the same vertical direction along the full length of the flow path through the manifold 1 means that the vertical vector component vc does not change its vertical direction from a first vertical direction to a second vertical direction, wherein the second vertical direction is opposite to the first vertical direction. The vertical vector component vc is parallel to the local gravity vector gv. The manifold 1 may be arranged such that the intended flow direction fd1 through the manifold 1 has a vector component vc being parallel to a local gravity vector gv along the full length of the flow path through the manifold 1 when the manifold 1 is mounted in the intended mounting position to a vehicle and the vehicle is positioned in an intended use position onto a flat horizontal surface. In this manner, air bubbles entering the manifold 1, for example via the coolant inlet 13 or the receiving connections r1-r5, can be transported to the deairing section 19 in an efficient manner by gravity acting on coolant surrounding the air bubbles.

Moreover, as seen in Fig. 1, according to the illustrated embodiments, the deairing section 19 is arranged downstream of the receiving section 5, downstream of the mixing section 9, downstream of the coolant inlet 13, and downstream of the supplying section 7 relative to the intended flow direction fd1 through the manifold 1. In this manner, a further efficient transport of air bubbles is provided towards the deairing section 19 since air bubbles to some extent follow the stream of coolant through the manifold 1.

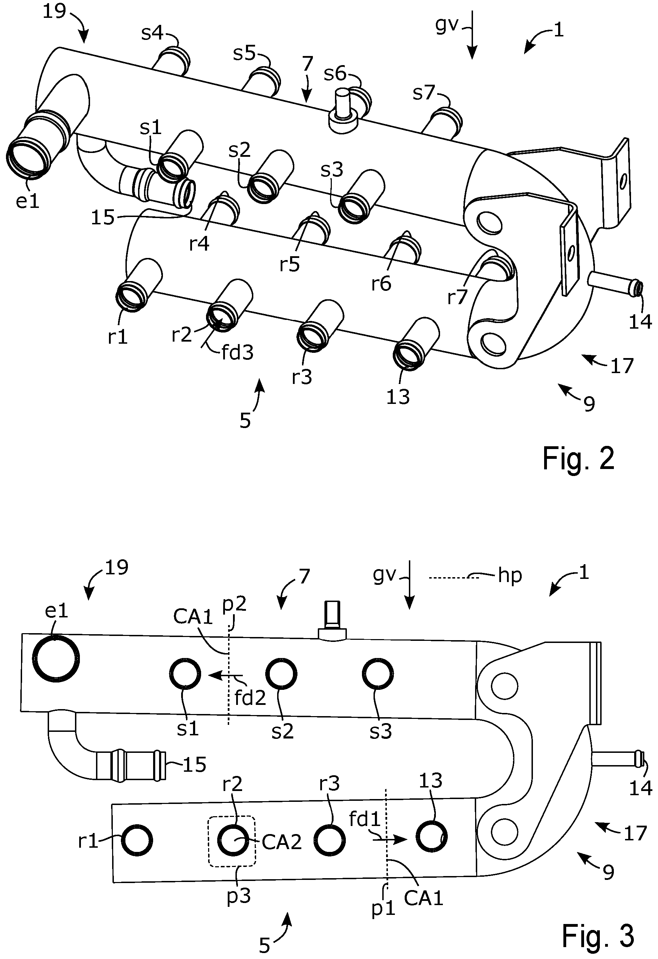

Fig. 2 illustrates a perspective view of a coolant distribution manifold 1, according to some embodiments, for a vehicle propulsion battery cooling system. The coolant distribution manifold 1 illustrated in Fig. 2 comprises the same or corresponding features, functions, and advantages as the coolant distribution manifold 1 explained with reference to Fig. 1. The manifold 1 according to the embodiments illustrated in Fig. 2 is configured to be connected to seven separate coolant circuits, wherein each coolant circuit may be configured to cool a respective set of propulsion battery cells as explained with reference to Fig. 1.

The manifold 1 comprises seven receiving connections r1-r7 arranged at a receiving section 5 of the manifold 1. Moreover, the manifold 1 comprises seen supplying connections s1-s7 arranged at a supplying section 7 of the manifold 1. As seen in Fig. 2, each of the receiving section 5 and the supplying section 7 is tubular. Moreover, the manifold 1 comprises a u-shaped tubular section 17 between the receiving section 5 and the supplying section 7. In this manner, the available space inside a vehicle can be utilized in an efficient manner. Moreover, a further efficient transport of air bubbles is provided, as is further explained herein. According to the illustrated embodiments, the u-shaped section 17 forms part of the mixing section 9 of the manifold 1 arranged between the receiving section 5 and the supplying section 7.

The manifold 1 further comprises a coolant inlet 13 and a coolant outlet 15 for the connection to a temperature conditioning circuit, such as a temperature conditioning circuit 11 according to the embodiments explained with reference to Fig. 1. As indicated in Fig. 2, according to the illustrated embodiments, the manifold 1 comprises a second coolant inlet 14. The second coolant inlet 14 may be connected to a second temperature conditioning circuit, such as a temperature conditioning circuit 11 according to the embodiments explained with reference to Fig. 1. However, according to some embodiments of the present disclosure, the second coolant inlet 14 may be connected to a temperature conditioning circuit configured to provide heated coolant and the coolant inlet 13 may be connected to a coolant circuit configured to provide cooled coolant. According to such embodiments, the cooling/heating efficiency provided by the manifold 1 can be regulated by controlling the flowrate of coolant flowing into the manifold 1 via the coolant inlet 13 and the second coolant inlet 14.

The manifold 1 further comprises a deairing connection e1 arranged at a deairing section 19 of the manifold 1. The deairing connection e1 may be connected to an expansion tank, as explained with reference to Fig. 1. A second temperature conditioning circuit connected to the second coolant inlet 14, as explained above, may utilize the coolant outlet 15 or the deairing connection e1 of the manifold 1 for returning coolant from the manifold 1 to the second temperature conditioning circuit. As an example, such a second temperature conditioning circuit may return coolant from the manifold 1 via a t-connection arranged downstream of the coolant outlet 15 or arranged downstream of the deairing connection e1.

Fig. 3 illustrates a side view of the coolant distribution manifold 1 illustrated in Fig. 2. In Fig. 3, an average flow direction fd1 of the receiving section 5 is indicated and an average flow direction fd2 of the supplying section 7 is indicated. Moreover, in Fig.3, a horizontal plane hp and a local gravity vector gv is illustrated. The local gravity vector gv is representative of a local gravity vector gv at the location of the cooling system 3. The horizontal plane hp is perpendicular to the local gravity vector gv. In Fig. 3, the manifold 1 is illustrated in a position corresponding to an intended mounting position of the manifold 1.

As can be seen in Fig. 3, the tubular sections forming the receiving section 5 and the supplying section 7 are provided with a slight inclination relative to the horizontal plane hp when the manifold 1 is in the intended mounting position. The u-shaped section 17 connects the receiving section 5 and the supplying section 7 in a manner such that the intended average flow direction fd1, fd2 through the manifold 1 has a vector component being parallel to a local gravity vector gv along the full length of the flow path through the manifold 1 when the manifold 1 is mounted in the intended mounting position to a vehicle and the vehicle is positioned in an intended use position onto a flat horizontal surface. In this manner, air bubbles entering the manifold 1, for example via the coolant inlet 13 or the receiving connections r1-r5, can be transported to the deairing section 19 in an efficient manner by gravity acting on coolant surrounding the air bubbles. Moreover, as is clearly seen in Fig. 2 and Fig. 3, the coolant outlet 15 of the manifold 1 is arranged below the deairing connection e1 when the manifold 1 is positioned in the intended mounting position. In this manner, transport of air bubbles to the coolant outlet 15 is avoided.

According to embodiments herein, a flow cross sectional area CA1 through the manifold 1 is at least twice as large as a flow cross sectional area CA2 through each one of the connections r1-r7, s1-s7 between the manifold 1 and the at least two coolant circuits. The flow cross sectional area CA1 through the manifold 1 is herein defined as the cross sectional area CA1 formed by inner delimiting surfaces of the manifold 1, measured in a plane p1, p2 perpendicular to an average flow direction fd1, fd2 through the manifold 1. The flow cross sectional area CA2 through each connection r1-r7, s1-s7 is herein defined as the cross sectional area CA2 formed by inner delimiting surfaces of each of the connections r1-r7, s1-s7 between the manifold 1 and the at least two coolant circuits, measured in a respective plane p3 being perpendicular to an average flow direction fd3 through the respective connection r1-r7, s1-s7. According to the illustrated embodiments, all of the connections r1-r7, s1-s7 are provided with the same flow cross sectional area CA2. For the reason of brevity and clarity, a third plane p3 of a second receiving connection r2 is illustrated in Fig. 3, and an average flow direction fd3 through the second receiving connection r2 is illustrated in Fig. 2.

Due to these features, a manifold 1 is provided in which each coolant circuit is supplied with coolant from one common tempered coolant reservoir, i.e. the manifold 1, having conditions for supplying coolant to each of the at least two coolant circuits at a more constant temperature level and a more constant pressure level. As a further result thereof, a manifold 1 is provided in which the risk of flow disturbances is reduced.

According to the illustrated embodiments, the receiving section 5 and the supplying section 7 each has a circular cross section, wherein the diameter of the inner delimiting surfaces of the receiving section 5 and the supplying section 7 is approximately 6 cm. Moreover, each connection r1-r7, s1-s7 has a circular cross section, wherein the diameter of the inner delimiting surfaces of the respective connection r1-r7, s1-s7 is approximately 2 cm. Thus, according to the illustrated embodiments, the flow cross sectional area CA1 of the manifold 1 is approximately 28.27 cm². Moreover, according to the illustrated embodiments, the flow cross sectional area CA2 of each connection r1-r7, s1-s7 is approximately 3.14 cm².

Consequently, according to the illustrated embodiments, the flow cross sectional area CA1 through the manifold 1 is approximately nine times as large as a flow cross sectional area CA2 through each connection r1-r7, s1-s7 between the manifold 1 and the at least two coolant circuits. According to further embodiments, the flow cross sectional area CA1 through the manifold 1 may be within the range of two to twenty times as large as a flow cross sectional area CA2 through each one of the connections r1-r7, s1-s7 between the manifold 1 and the at least two coolant circuits. In this manner, a low risk of flow disturbances is provided while the available space inside a vehicle can be utilized in an efficient manner.

According to some embodiments, the manifold 1 may be mounted to a vehicle such that the u-shaped section 17 of the manifold 1 points backwards in the vehicle, i.e. points in a direction opposite to a forward driving direction of the vehicle. In other words, in such embodiments, the u-shaped section 17 may be the rearmost portion of the manifold 1 relative to the forward driving direction of the vehicle when the manifold 1 is mounted in the intended mounting position on the vehicle.

According to some embodiments, the manifold 1 is made of metal, such as steel. According to further embodiments, the manifold 1 is made of a polymeric material, such as plastic. Thereby, the manifold 1 can be manufactured in a further cost-efficient manner.

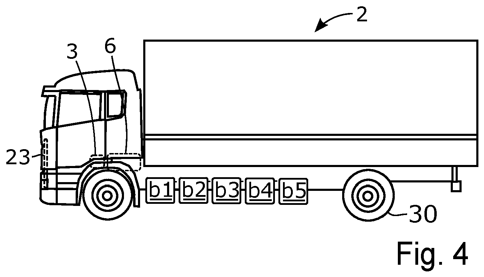

**Fig. 4** schematically illustrates a vehicle 2 according to some embodiments. The vehicle 2 comprising a number of propulsion battery packs b1, b2, b3, b4, b5. Moreover, the vehicle 2 comprises an electric propulsion system 6. Each propulsion battery pack b1, b2, b3, b4, b5 is configured to provide electricity to the electric propulsion system 6. The electric propulsion system 6 is configured to provide motive power to the vehicle 2 via wheels 30 of the vehicle 2. According to the illustrated embodiments, the vehicle 2 is pure electric vehicle, i.e. a vehicle 2 comprising a purely electric propulsion system 6. According to further embodiments, the vehicle 2, as referred to herein, may be a hybrid electric vehicle, comprising a second power source, such as a combustion engine, in addition to the electric propulsion system 6.

According to the illustrated embodiments, the vehicle 2 is a truck. However, according to further embodiments, the vehicle 2, as referred to herein, may be another type of manned or unmanned vehicle for land based propulsion such as a lorry, a bus, a construction vehicle, a tractor, a car, or the like.

The vehicle 2 comprises a vehicle propulsion battery cooling system 3 according to the embodiments illustrated in Fig. 1. The vehicle propulsion battery cooling system 3 is configured to cool the battery packs b1, b2, b3, b4, b5 of the vehicle 2.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A vehicle propulsion battery cooling system (3) comprising:
- a temperature conditioning circuit (11),
- at least two coolant circuits (c1, c2, c3, c4, c5) each configured to cool a respective set (b1, b2, b3, b4, b5) of propulsion battery cells (4), and
- a coolant distribution manifold (1), wherein the coolant distribution manifold (1) comprises:
- a coolant inlet (13) configured to receive coolant from the temperature conditioning circuit (11),
- a receiving section (5) configured to receive coolant from the at least two coolant circuits (c1, c2, c3, c4, c5), and
- a supplying section (7) configured to supply coolant to the at least two coolant circuits (c1, c2, c3, c4, c5),
- wherein the supplying section (7) is arranged downstream of the coolant inlet (13) and of the receiving section (5) relative to an intended flow direction (fd1, fd2) through the manifold (1).

2. The cooling system (3)according to claim 1, wherein the coolant inlet (13) is arranged upstream of the receiving section (5) relative to an intended flow direction (fd1, fd2) through the manifold (1), is arranged at the receiving section (5), or is arranged between the receiving section (5) and the supplying section (7).

3. The cooling system (3) according to claim 1 or 2, wherein the manifold (1) comprises a coolant outlet (15) configured to feed coolant to the temperature conditioning circuit (11).

4. The cooling system (3) according to claim 3, wherein the coolant outlet (15) is arranged between the receiving section (5) and the supplying section (7), is arranged at the supplying section (7), or is arranged downstream of the supplying section (7).

5. The cooling system (3) according to any one of the preceding claims, wherein each of the receiving section (5) and the supplying section (7) is tubular, and wherein the manifold (1) comprises a u-shaped section (17) between the receiving section (5) and the supplying section (7).

6. The cooling system (3) according to any one of the preceding claims, wherein a flow cross sectional area (CA1) through the manifold (1) is at least twice as large as a flow cross sectional area (CA2) through each connection (r1-r7, s1-s7) between the manifold (1) and the at least two coolant circuits (c1, c2, c3, c4, c5).

7. The cooling system (3) according to any one of the preceding claims, wherein the manifold (1) comprises a deairing section (19) configured to evacuate air from the manifold (1).

8. The cooling system (3) according claim 7, wherein the deairing section (19) is arranged downstream of the supplying section (7).

9. The cooling system (3) according to claim 8, wherein each of the at least two coolant circuits (c1, c2, c3, c4, c5) comprises a coolant pump (cp1, cp2, cp3, cp4, cp5) configured to pump coolant through the respective coolant circuit (c1, c2, c3, c4, c5).

10. The cooling system (3) according to claim 8 or 9, wherein each set (b1, b2, b3, b4, b5) of propulsion battery cells (4) forms part of a propulsion battery pack (b1, b2, b3, b4, b5).

11. The cooling system (3) according to any one of the claims 8 - 10, wherein the manifold (1) comprises a deairing section (19), and wherein the cooling system (3) comprises an expansion tank (21) fluidly connected to the deairing section (19).

12. The cooling system (3) according to any one of the claims 8 - 11, wherein the cooling system (3) comprises at least four coolant circuits (c1, c2, c3, c4, c5) each configured to cool a respective set (b1, b2, b3, b4, b5) of propulsion battery cells (4), wherein the receiving section (5) of the manifold (1) is configured to receive coolant from the at least four coolant circuits (c1, c2, c3, c4, c5), and wherein the supplying section (7) of the manifold (1) is configured to supply coolant to the at least four coolant circuits (c1, c2, c3, c4, c5).

13. The cooling system (3) according to any one of the claims 8 - 12, wherein the temperature conditioning circuit (11) comprises a radiator (23) and a coolant pump (cp11).

14. A vehicle (2) comprising a set (b1, b2, b3, b4, b5) of propulsion battery cells (4) and a vehicle propulsion battery cooling system (3) according to any one of the claims 8 - 13, wherein the vehicle propulsion battery cooling system (3) is configured to cool the set (b1, b2, b3, b4, b5) of propulsion battery cells (4).

## Patentansprüche

1. Fahrzeugantriebsbatterie-Kühlsystem (3) umfassend:
- einen Temperaturregelungskreislauf (11),
- wenigstens zwei Kühlmittelkreisläufe (c1, c2, c3, c4, c5), die jeweils dazu eingerichtet sind, einen jeweiligen Satz (b1, b2, b3, b4, b5) Antriebsbatteriezellen (4) zu kühlen und
- einen Kühlmittelverteiler (1), wobei der Kühlmittelverteiler (1) Folgendes umfasst:
- einen Kühlmitteleinlass (13), der zum Aufnehmen von Kühlmittel aus dem Temperaturregelungskreislauf (11) eingerichtet ist,
- einen Aufnahmeabschnitt (5), der zum Aufnehmen von Kühlmittel aus den wenigstens zwei Kühlmittelkreisläufen (c1, c2, c3, c4, c5) eingerichtet ist und
- einen Zufuhrabschnitt (7), der zum Zuführen von Kühlmittel zu den wenigstens zwei Kühlmittelkreisläufen (c1, c2, c3, c4, c5) eingerichtet ist,
- wobei der Zufuhrabschnitt (7) stromabwärts des Kühlmitteleinlasses (13) und des Aufnahmeabschnitts (5) relativ in einer vorgesehenen Flussrichtung (fd1, fd2) durch den Verteiler (1) angeordnet ist.

2. Kühlsystem (3) nach Anspruch 1, wobei der Kühlmitteleinlass (13) stromaufwärts des Aufnahmeabschnitts (5) relativ in einer vorgesehenen Flussrichtung (fd1, fd2) durch den Verteiler (1) am Aufnahmeabschnitt (5) oder zwischen dem Aufnahmeabschnitt (5) und dem Zufuhrabschnitt (7) angeordnet ist.

3. Kühlsystem (3) nach Anspruch 1 oder 2, wobei der Verteiler (1) einen Kühlmittelauslass (15) umfasst, der dazu eingerichtet ist, Kühlmittel in den Temperaturregelungskreislauf (11) einzuspeisen.

4. Kühlsystem (3) nach Anspruch 3, wobei der Kühlmitteleinlass (15) zwischen dem Aufnahmeabschnitt (5) und dem Zufuhrabschnitt (7), am Zufuhrabschnitt (7) oder stromabwärts des Zufuhrabschnitts (7) angeordnet ist.

5. Kühlsystem (3) nach einem der vorangehenden Ansprüche, wobei alle Aufnahmeabschnitte (5) und Zufuhrabschnitte (7) rohrförmig sind und wobei der Verteiler (1) einen U-förmigen Abschnitt (17) zwischen dem Aufnahmeabschnitt (5) und dem Zufuhrabschnitt (7) umfasst.

6. Kühlsystem (3) nach einem der vorangehenden Ansprüche, wobei ein Flussquerschnittsbereich (CA1), der durch den Verteiler (1) führt wenigstens doppelt so groß ist wie ein Flussquerschnittsbereich (CA2), der durch alle Verbindungen (r1-r7, s1-s7) zwischen dem Verteiler und den wenigstens zwei Kühlmittelkreisläufen (c1, c2, c3, c4, c5) führt.

7. Kühlsystem (3) nach einem der vorangehenden Ansprüche, wobei der Verteiler (1) einen Entlüftungsabschnitt (19) umfasst, der dazu eingerichtet ist, Luft aus dem Verteiler (1) abzuleiten.

8. Kühlsystem (3) nach Anspruch 7 wobei der Entlüftungsabschnitt (19) stromabwärts des Zufuhrabschnitts (7) angeordnet ist.

9. Kühlsystem (3) nach Anspruch 8, wobei jeder der wenigstens zwei Kühlmittelkreisläufe (c1, c2, c3, c4, c5) eine Kühlmittelpumpe (cp1, cp2, cp3, cp4, cp5) umfasst, die dazu eingerichtet ist, Kühlmittel durch den jeweiligen Kühlmittelkreislauf (c1, c2, c3, c4, c5) zu pumpen.

10. Kühlsystem (3) nach Anspruch 8 oder 9, wobei jeder Satz (b1, b2, b3, b4, b5) Antriebsbatteriezellen (4) Teile eines Antriebsbatteriepacks (b1, b2, b3, b4, b5) bildet.

11. Kühlsystem (3) nach einem der Ansprüche 8 - 10, wobei der Verteiler einen Entlüftungsabschnitt (19) umfasst und wobei das Kühlsystem (3) ein Ausdehnungsgefäß (21) umfasst, das in Fluidverbindung mit dem Entlüftungsabschnitt (19) steht.

12. Kühlsystem (3) nach einem der Ansprüche 8 - 11, wobei das Kühlsystem (3) wenigstens vier Kühlmittelkreisläufe (c1, c2, c3, c4, c5) umfasst, die jeweils dazu eingerichtet sind, einen jeweiligen Satz (b1, b2, b3, b4, b5) Antriebsbatteriezellen (4) zu kühlen, wobei der Aufnahmeabschnitt (5) des Verteilers (1) dazu eingerichtet ist, Kühlmittel der wenigstens vier Kühlmittelkreisläufe (c1, c2, c3, c4, c5) aufzunehmen und wobei der Zufuhrabschnitt (7) des Verteilers (1) dazu eingerichtet ist, den wenigstens vier Kühlmittelkreisläufen (c1, c2, c3, c4, c5) Kühlmittel zuzuführen.

13. Kühlsystem (3) nach einem der Ansprüche 8 - 12, wobei der Temperaturregelungskreislauf (11) einen Kühler (23) und eine Kühlmittelpumpe (cp11) umfasst.

14. Fahrzeug (2) umfassend einen Satz (b1, b2, b3, b4, b5) Antriebsbatteriezellen (4) und ein Fahrzeugantriebsbatterie-Kühlsystem (3) nach einem der Ansprüche 8 - 13, wobei das Fahrzeugantriebsbatterie-Kühlsystem (3) dazu eingerichtet ist, den Satz (b1, b2, b3, b4, b5) Antriebsbatteriezellen (4) zu kühlen.

## Revendications

1. Système de refroidissement (3) de batterie de propulsion de véhicule, comprenant :
- un circuit de conditionnement de température (11),
- au moins deux circuits de liquide de refroidissement (c1, c2, c3, c4, c5) configurés chacun pour refroidir un ensemble (b1, b2, b3, b4, b5) respectif d'éléments de batterie de propulsion (4), et
- un collecteur de distribution de liquide de refroidissement (1), dans lequel le collecteur de distribution de liquide de refroidissement (1) comprend :
une entrée de liquide de refroidissement (13) configurée pour recevoir du liquide de refroidissement depuis le circuit de conditionnement de température (11),
une section de réception (5) configurée pour recevoir du liquide de refroidissement depuis les au moins deux circuits de liquide de refroidissement (c1, c2, c3, c4, c5), et
une section d'alimentation (7) configurée pour alimenter en liquide de refroidissement les au moins deux circuits de liquide de refroidissement (c1, c2, c3, c4, c5),
dans lequel la section d'alimentation (7) est agencée en aval de l'entrée de liquide de refroidissement (13) et de la section de réception (5) par rapport à une direction d'écoulement prévue (fd1, fd2) à travers le collecteur (1).

2. Système de refroidissement (3) selon la revendication 1, dans lequel l'entrée de liquide de refroidissement (13) est agencée en amont de la section de réception (5) par rapport à une direction d'écoulement prévue (fd1, fd2) à travers le collecteur (1), est agencée au niveau de la section de réception (5) ou est agencée entre la section de réception (5) et la section d'alimentation (7).

3. Système de refroidissement (3) selon la revendication 1 ou 2, dans lequel le collecteur (1) comprend une sortie de liquide de refroidissement (15) configurée pour approvisionner en liquide de refroidissement le circuit de conditionnement de température (11).

4. Système de refroidissement (3) selon la revendication 3, dans lequel la sortie de liquide de refroidissement (15) est agencée entre la section de réception (5) et la section d'alimentation (7), est agencée au niveau de la section d'alimentation (7) ou est agencée en aval de la section d'alimentation (7).

5. Système de refroidissement (3) selon l'une quelconque des revendications précédentes, dans lequel chacune de la section de réception (5) et de la section d'alimentation (7) est tubulaire, et dans lequel le collecteur (1) comprend une section en forme de U (17) entre la section de réception (5) et la section d'alimentation (7).

6. Système de refroidissement (3) selon l'une quelconque des revendications précédentes, dans lequel une aire de surface en coupe transversale de l'écoulement (CA1) à travers le collecteur (1) est au moins deux fois plus grande qu'une aire de surface en section transversale de l'écoulement (CA2) à travers chaque raccordement (r1-r7, s1-s7) entre le collecteur (1) et les au moins deux circuits de liquide de refroidissement (c1, c2, c3, c4, c5).

7. Système de refroidissement (3) selon l'une quelconque des revendications précédentes, dans lequel le collecteur (1) comprend une section de désaération (19) configurée pour évacuer l'air du collecteur (1).

8. Système de refroidissement (3) selon la revendication 7, dans lequel la section de désaération (19) est agencée en aval de la section d'alimentation (7).

9. Système de refroidissement (3) selon la revendication 8, dans lequel chacun des au moins deux circuits de liquide de refroidissement (c1, c2, c3, c4, c5) comprend une pompe de liquide de refroidissement (cpl, cp2, cp3, cp4, cp5) configurée pour pomper le liquide de refroidissement à travers le circuit de liquide de refroidissement (c1, c2, c3, c4, c5) respectif.

10. Système de refroidissement (3) selon la revendication 8 ou 9, dans lequel chaque ensemble (b1, b2, b3, b4, b5) d'éléments de batterie de propulsion (4) fait partie d'un bloc de batterie de propulsion (b1, b2, b3, b4, b5).

11. Système de refroidissement (3) selon l'une quelconque des revendications 8 à 10, dans lequel le collecteur (1) comprend une section de désaération (19), et dans lequel le système de refroidissement (3) comprend un vase d'expansion (21) raccordé fluidiquement à la section de désaération (19).

12. Système de refroidissement (3) selon l'une quelconque des revendications 8 à 11, dans lequel le système de refroidissement (3) comprend au moins quatre circuits de liquide de refroidissement (c1, c2, c3, c4, c5) configurés chacun pour refroidir un ensemble (b1, b2, b3, b4, b5) respectif des éléments de batterie de propulsion (4), dans lequel la section de réception (5) du collecteur (1) est configurée pour recevoir du liquide de refroidissement depuis les au moins quatre circuits de liquide de refroidissement (c1, c2, c3, c4, c5), et dans lequel la section d'alimentation (7) du collecteur (1) est configurée pour alimenter en liquide de refroidissement les au moins quatre circuits de liquide de refroidissement (c1, c2, c3, c4, c5).

13. Système de refroidissement (3) selon l'une quelconque des revendications 8 à 12, dans lequel le circuit de conditionnement de température (11) comprend un radiateur (23) et une pompe de liquide de refroidissement (cp11).

14. Véhicule (2) comprenant un ensemble (b1, b2, b3, b4, b5) d'éléments de batterie de propulsion (4) et un système de refroidissement de batterie de propulsion de véhicule (3) selon l'une quelconque des revendications 8 à 13, dans lequel le système de refroidissement de batterie de propulsion de véhicule (3) est configuré pour refroidir l'ensemble (b1, b2, b3, b4, b5) d'éléments de batterie de propulsion (4).
